Europäisches Patentamt

European Patent Office

Office européen des brevets

(19)

(11) Numéro de publication : **0 452 165 A2**

(12) **DEMANDE DE BREVET EUROPEEN**

(21) Numéro de dépôt : 91400596.2

(22) Date de dépôt : 05.03.91

(51) Int. Cl.⁵ : **H01G 4/24, H01G 1/147**

(30) Priorité : 09.03.90 FR 9003035

(43) Date de publication de la demande :
16.10.91 Bulletin 91/42

(84) Etats contractants désignés :
BE CH DE ES FR GB GR IT LI LU NL

(71) Demandeur : COMPAGNIE EUROPEENNE DE
COMPOSANTS ELECTRONIQUES LCC
50, rue Jean-Pierre Timbaud
F-92400 Courbevoie (FR)

(72) Inventeur : Pageaud, Michel
THOMSON-CSF SCPI Cédex 67
F-92045 Paris la Défense (FR)
Inventeur : Feral, Thierry
THOMSON-CSF SCPI Cédex 67
F-92045 Paris la Défense (FR)

(74) Mandataire : Ruellan-Lemonnier, Brigitte et al
THOMSON-CSF SCPI
F-92045 PARIS LA DEFENSE CEDEX 67 (FR)

(54) Condensateur à film diélectrique souple métallisé, et procédé de réalisation d'un tel condensateur.

(57)    La présente invention concerne un condensateur à film diélectrique souple métallisé du type empilé ou bobiné.
   Ledit condensateur est réalisé par superposition d'au moins deux films métallisés décalés latéralement l'un par rapport à l'autre de manière à former des couches (10, 11) de rangs pairs et impairs alternés, destinées à être reliées entre elles par des connexions électriques latérales (e).
   Conformément à l'invention, une des faces des films est entièrement métallisée (13) et en ce que l'intervalle entre deux couches de même rang est rempli d'une couche d'isolant (i) elle-même recouverte par les connexions électriques latérales (e).
   L'invention s'applique aux condensateurs films.

# FIG. 4

# CONDENSATEUR A FILM DIELECTRIQUE SOUPLE METALLISE ET PROCEDE DE REALISATION D'UN TEL CONDENSATEUR

La présente invention concerne les condensateurs à film diélectrique souple métallisé du type empilé ou bobiné ainsi qu'un procédé de réalisation de ces condensateurs.

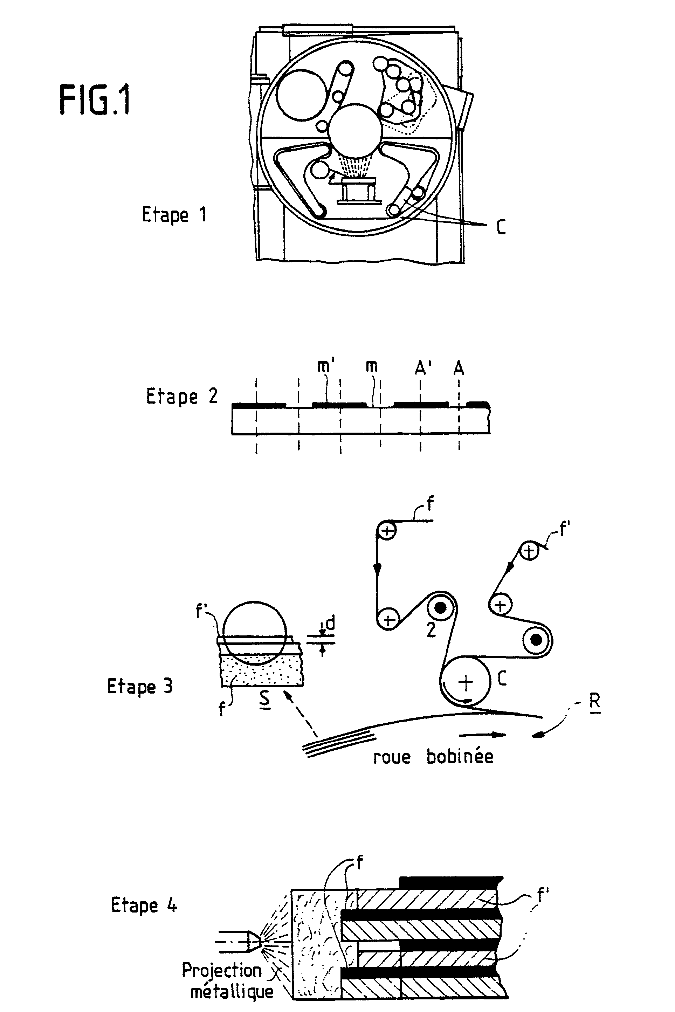

La fabrication des condensateurs à film diélectrique souple métallisé est bien connue de l'homme de l'art. Comme représenté sur la figure 1, qui concerne les principales étapes de fabrication d'un condensateur à film diélectrique souple métallisé du type empilé, cette fabrication peut être divisée en quatre étapes principales. L'étape 1 consiste à métalliser un film diélectrique souple de grande largeur tel qu'un film de polyester, de polycarbonate, de polysulfone ou de polypropylène par un procédé d'évaporation sous vide. Actuellement, cette métallisation du film est réalisée avec des marges non métallisées qui sont obtenues lors du procédé d'évaporation sous vide en prévoyant des bandes-cache comme représentées à la figure 1 par la référence C.

Dans une seconde étape, on réalise la découpe du film métallisé de grande largeur en des galettes de film de largeur voulue. Pour pouvoir utiliser les galettes dans la fabrication de condensateurs, les galettes de film doivent être constituées de galettes de films pairs ou impairs. Pour obtenir ces galettes de films pairs ou impairs, comme représenté à l'étape 2 de la figure 1, il convient de découper le film métallisé de grande largeur, au milieu des marges m et au milieu de la partie métallisée m' entre deux marges, comme représenté respectivement par les références A et A' sur la figure 1.

Lors de l'étape 3, on réalise le bobinage de deux films f, f' respectivement pair et impair sur une roue de grand diamètre référencée R. Comme représenté par la référence S, le bobinage des films pair et impair est réalisé en créant un décalage entre les deux films appelé débord d. Ce bobinage sur une roue de grand diamètre permet d'obtenir un condensateur-mère. Ensuite, de manière connue, lors de l'étape 4, on projette sur chaque côté du condensateur-mère ainsi réalisé, une métallisation de manière à réaliser les connexions électriques latérales. Cette métallisation est réalisée, de préférence par schoopage. Comme représenté sur la figure 1, le schoopage permet de relier d'un côté les films pairs référencés f et de l'autre côté les films impairs référencés f'.

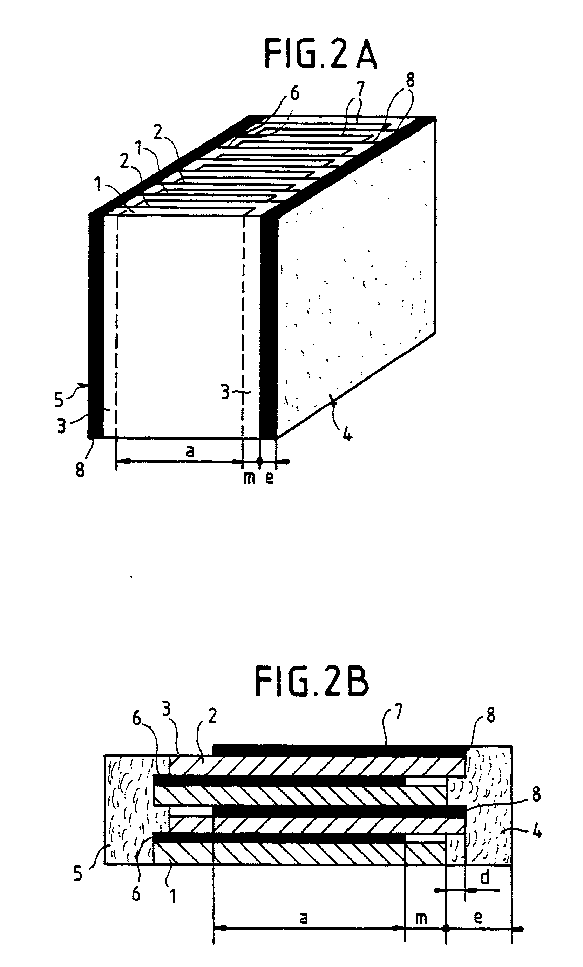

Une fois l'ensemble de ces opérations terminées, on obtient donc un condensateur-mère. Le condensateur-mère est alors découpé de manière à obtenir des condensateurs individuels tels que représenté sur les figures 2A et 2B. Ce condensateur est généralement de forme parallélépipèdique. Il est constitué d'un empilement de couches de rangs pairs et impairs alternées référencées 1 et 2. Chaque couche est constituée par un film plastique souple formant diélectrique. Chaque film diélectrique possède sur une de ces faces une zone métallisée 7 et une marge latérale 3 de largeur m non métallisée. D'autre part, comme représenté sur les figures 2, des connexions électriques ont été déposées sur chacune des faces latérales 4, 5 du condensateur. Ces connexions latérales permettent de relier électriquement et mécaniquement les zones métallisées de toutes les couches de même rang en connectant respectivement les parties 6 et les parties 8 des zones métallisées. Dans ce cas, on obtient donc une largeur active $a$ pour le condensateur. Cette largeur correspond à la partie en regard entre deux zones métallisées successives. Cette largeur $a$ est entourée, de chaque côté, par une largeur m correspondant à la marge latérale de chaque film, à savoir la partie non métallisée. Cette marge est nécessaire dans le procédé de fabrication utilisé afin d'éviter les courts-circuits entre les couches paires et impaires qui pourraient être connectées lors du schoopage ou l'arc électrique au moment de la charge et de la décharge, cet arc engendrant un courant important favorisé par les effets de pointe du bord métallisé en faible épaisseur. D'autre part, sur le condensateur, il existe de chaque côté une distance $d$ appelée débord. Cette distance $d$ résulte du fait que le bobinage des films métallisés est effectué avec deux films légèrement décalés latéralement l'un par rapport à l'autre. Dans les procédés actuellement utilisés, la marge m a une largeur d'environ 4/10$^e$ tandis que le débord $d$ présente une largeur de 1 à 2/10$^e$.

Cette marge latérale nécessaire à la réalisation des condensateurs selon le procédé décrit avec référence à la figure 1 est par nature une largeur sur le film non active. Cela entraîne donc un volume sur le composant non utilisable par l'utilisateur. D'autre part, le procédé mis en oeuvre pour réaliser ces condensateurs présente un certain nombre d'inconvénients. En effet, il est nécessaire de réaliser des marges qui peuvent être de largeurs très petites, ce qui nécessite des techniques de plus en plus sophistiquées. De plus, le centrage des marges lors de la métallisation du film diélectrique de grande largeur est une opération délicate. Les caches utilisés pour la réalisation des marges sont de plus en plus fragiles et onéreux notamment les caches utilisés pour les marges de faibles largeurs. D'autre part, lors de la découpe du film métallisé de grande largeur, le centrage des couteaux dans la partie métallisée et dans la partie non métallisée doit être réalisé avec une précision importante. De plus, il est nécessaire de repérer et de gérer les galettes de films pour connaître leur destination, à savoir galettes de films pairs ou impairs.

La présente invention a donc pour but de remédier à ces inconvénients en proposant de réaliser des condensateurs à film diélectrique souple métallisé du type empilé ou bobiné n'utilisant plus de films métallisés avec des marges.

La présente invention a aussi pour but un nouveau procédé de fabrication de ces condensateurs qui soient d'une mise en oeuvre beaucoup plus simple.

En conséquence, la présente invention a pour objet un condensateur à film diélectrique souple métallisé du type empilé ou bobiné, ledit condensateur étant réalisé par superposition directe d'au moins deux films métallisés décalés latéralement l'un par rapport à l'autre de manière à former des couches de rangs pairs et impairs alternés, destinées à être reliées entre elles par des connexions électriques latérales, caractérisé en ce qu'une des faces des films est entièrement métallisée et en ce que l'intervalle entre deux couches de même rang est rempli par un matériau isolant recouvert par les connexions électriques latérales.

Selon un mode de réalisation préférentiel, l'isolant utilisé dans ce cas est constitué par une poudre époxy, un polyamide ou un vernis silicone. De même, les connexions électriques latérales sont des métallisations déposées par schoopage.

La présente invention concerne aussi un procédé de fabrication d'un condensateur tel que décrit ci-dessus, caractérisé en ce qu'il comporte les étapes suivantes :

– métallisation d'un film diélectrique souple de grande largeur, sur toute sa largeur ;
– découpe du film en galettes de film de largeur voulue ;
– bobinage de deux films métallisés décalés latéralement l'un par rapport à l'autre de manière à former des couches de rangs pairs et impairs alternés ;
– remplissage d'au moins l'intervalle entre deux couches de même rang par un isolant ;
– schoopage des côtés latéraux pour réaliser les connexions électriques latérales.

Selon un mode de réalisation préférentiel, le remplissage d'au moins l'intervalle entre deux couches de même rang par un isolant se fait par schoopage, le schoopage étant réalisé, de préférence, par projection de l'isolant dans la flamme d'un chalumeau en utilisant comme masque le débord des couches de même rang.

D'autres caractéristiques et avantages de la présente invention apparaîtront à la lecture de la description faite ci-après d'un mode de réalisation préférentiel d'un condensateur conforme à la présente invention, cette description étant faite avec référence aux dessins ci-annexés dans lesquels :

– la figure 1 déjà décrite représente schématiquement les différentes étapes d'un procédé de fabrication d'un condensateur à film diélectrique souple métallisé du type empilé conforme à l'art antérieur ;
– les figures 2A et 2B sont respectivement une vue en perspective et une vue en coupe d'un condensateur de type empilé obtenu par le procédé de la figure 1 ;
– la figure 3 est une représentation schématique des principales étapes du procédé de fabrication d'un condensateur à film diélectrique souple métallisé conforme à la présente invention, et
– la figure 4 est une vue en coupe d'un condensateur obtenu par le procédé de la figure 3.

La présente invention sera décrite en se référant à la fabrication d'un condensateur à film diélectrique souple métallisé de type empilé, toutefois il est évident pour l'homme de l'art que la présente invention peut aussi être appliquée aux condensateurs à film diélectrique souple métallisé de type bobiné. Dans ce cas, le bobinage est réalisé sur un mandrin ou similaire de manière à réaliser directement un condensateur individuel. D'autre part, pour simplifier la description dans les figures, les mêmes éléments portent les mêmes références.

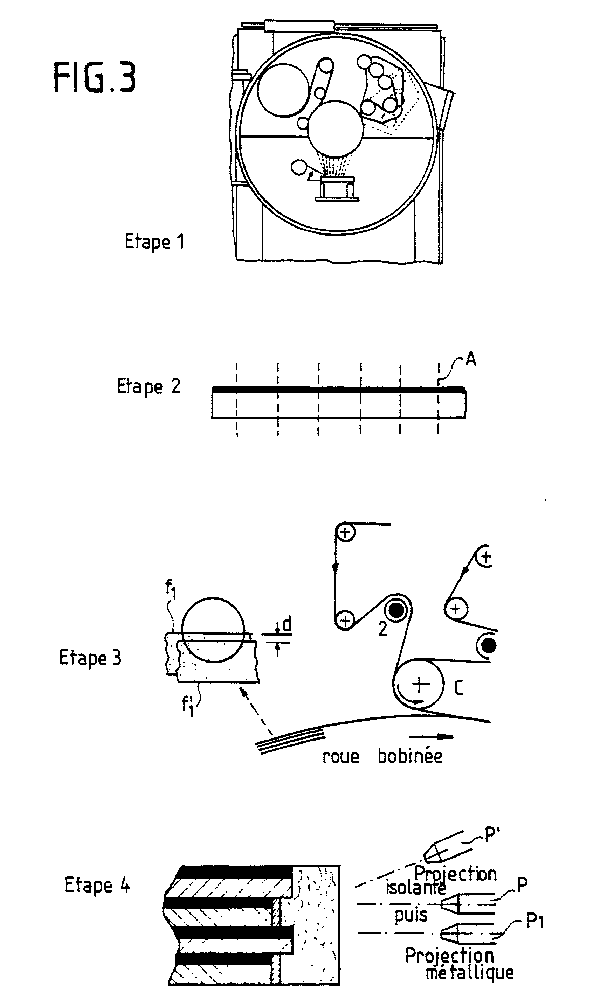

Comme représenté sur la figure 3, le procédé conforme à la présente invention comporte une étape 1 qui consiste à métalliser le film plastique de grande largeur constitué par un film en polyester, en polycarbonate, en polysulfone, en prolypropylène ou similaire sur toute sa largeur . Cette métallisation est réalisée par exemple par évaporation du métal dans une machine d'évaporation sous vide de type connu. Le métal est de préférence constitué par de l'aluminium, du zinc, de l'étain ou un alliage à base de ces métaux. Cette machine ne comporte donc plus de système pour amener des bandes-cache devant le dispositif d'évaporation du métal. Dans une seconde étape, on découpe le film plastique métallisé en galettes de film comme représenté à l'étape 2 sur la figure 3. Cette découpe se fait sans avoir besoin de surveiller le centrage des couteaux dans les marges puisque, conformément à la présente invention, les marges sont inexistantes. Les axes de découpe A sont donc beaucoup plus faciles à positionner. D'autre part, les galettes de film n'ont plus besoin d'être triées en galettes de films pairs ou impairs, ce qui simplifie beaucoup leur manupulation.

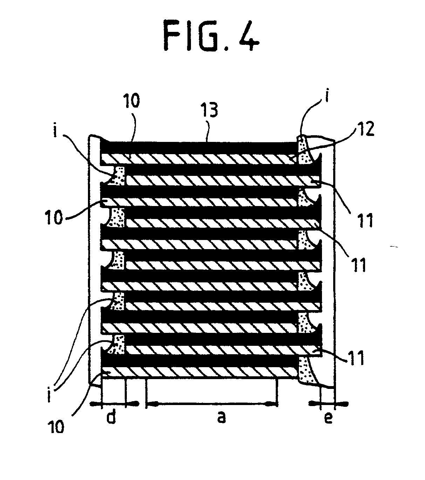

Dans une troisième étape, on réalise donc le bobinage de deux films plastiques sur une roue de grand diamètre pour obtenir un condensateur-mère nécessaire à la fabrication de condensateurs du type empilé. Cette opération de bobinage a lieu en décalant les deux films f,f' métallisés d'une distance $\underline{d}$ appelée débord. Dans le cadre de la présente invention, le débord $\underline{d}$ est supérieur au débord $\underline{d}$ utilisé dans l'art antérieur. Toutefois, ce débord $\underline{d}$ reste inférieur à la largeur constituée par l'ancien débord plus la marge dans le procédé de l'art antérieur. De ce fait, la largeur active $\underline{a}$ du condensateur est elle aussi plus importante, ce qui permet de gagner du volume actif comme on le verra plus clairement en se référant à la figure 4. Une fois le condensateur-mère réalisé sur la bobine, on passe à l'étape 4. Dans cette étape, on réalise tout d'abord la projection d'isolant dans l'intervalle entre deux films de même rang ou débord. Cette projection d'isolant peut être réalisée par schoopage en utilisant un chalumeau P. L'isolant utilisé est, de préférence, constitué par une poudre époxy, un polyamide ou un vernis silicone. Il doit résister à une température d'environ 100 à 150°C, présenter une viscosité suffisante pour venir former une couche dans le débord, sans toutefois fluer entre les différentes couches de film. La projection d'isolant est réalisée, de préférence, en utilisant les films diélectriques en débord comme cache, comme représenté par la référence P'. Une fois l'isolant inséré dans l'intervalle entre deux films de même rang en débord, on réalise de manière connue par projection d'une métallisation P1, le schoopage des côtés du condensateur-mère de manière à obtenir les connexions électriques latérales.

On obtient dans ce cas des condensateurs tels que représentés à la figure 4. Les blocs représentés sur la figure 4 sont constitués essentiellement d'un empilement d'un nombre pairs de couches 10, 11. Les couches sont constituées par un film plastique 12 recouvert sur une le ces faces d'une métallisation 13. L'autre face du film plastique n'est pas métallisée. Conformément à la présente invention, un isolant i a été déposé de chaque côté de l'empilement des couches dans l'intervalle entre deux couches en débord. Sur cet isolant est réalisé de manière connue par schoopage les connexions électriques latérales représentées par la couche e. Comme représenté sur la figure 4, la largeur active a correspondant à la partie en regard entre deux zones métallisées successives est dans ce cas plus importante que la largeur active des condensateurs de l'art antérieur, et ceci, même lorsque le débord d est augmenté de manière à permettre l'insertion de l'isolant comme représenté sur la figure 4.

On a décrit ci-dessus un procédé de fabrication préférentiel d'un condensateur à film diélectrique souple métallisé de type empilé. Il est évident pour l'homme de l'art que d'autres techniques peuvent être utilisées notamment pour remplir les intervalles d'isolant. Ainsi, on pourrait envisager de plonger les bobines de condensateur-mère dans l'isolant de manière à former lesdites couches, l'isolant débordant sur les couches en débord étant éliminé lors de la projection des métallisations latérales. On pourrait aussi réaliser cette étape par peinture ou similaire.

## Revendications

1. Condensateur à film diélectrique souple métallisé du type empilé ou bobiné, ledit condensateur étant réalisé par superposition directe d'au moins deux films métallisés décalés latéralement l'un par rapport à l'autre de manière à former des couches (10, 11) de rangs pairs et impairs alternés, destinées à être reliées entre elles par des connexions électriques latérales (e), caractérisé en ce qu'une des faces des films est entièrement métallisée (13) et en ce que l'intervalle entre deux couches de même rang est rempli d'un matériau isolant (i) recouvert par les connexions électriques latérales (e).

2. Condensateur selon la revendication 1, caractérisé en ce que l'isolant (i) est constitué par une poudre époxy, un polyamide ou un vernis silicone.

3. Condensateur selon la revendication 1, caractérisé en ce que les connexions électriques latérales (e) sont des métallisations déposées par schoopage.

4. Condensateur selon la revendication 1, caractérisé en ce que le film diélectrique souple (12) est un film en polyester, polycarbonate, polysulfone ou polypropylène.

5. Condensateur selon la revendication 1, caractérisé en ce que le film est métallisé par de l'aluminium, de l'étain, du zinc ou un alliage à base de ces métaux.

6. Procédé de fabrication d'un condensateur selon l'une quelconque des revendications 1 à 5, caractérisé en ce qu'il comporte les étapes suivantes :
   – métallisation d'un film diélectrique souple de grande largeur sur toute sa largeur ;
   – découpe du film en galettes de film de largeur voulue ;
   – bobinage de deux films métallisés décalés latéralement l'un par rapport à l'autre de manière à former des couches de rangs pairs et impairs alternées ;
   – remplissage d'au moins l'intervalle entre deux couches de même rang par un isolant ;
   – schoopage des côtés latéraux pour réaliser les connexions électriques latérales.

7. Procédé selon la revendication 6, caractérisé en ce que, dans le cas d'un condensateur de type empilé, le bobinage est réalisé sur une roue de grand diamètre de manière à obtenir un condensateur-mère.

8. Procédé selon la revendication 6, caractérisé en ce que, dans le cas d'un condensateur de type bobiné, le bobinage est réalisé sur un mandrin de manière à obtenir des condensateurs-individuels.

9. Procédé selon l'une quelconque des revendications 6 à 8, caractérisé en ce que le remplissage, d'au moins l'intervalle entre deux couches de même rang par un isolant, se fait par schoopage.

10. Procédé selon la revendication 9, caractérisé en ce que le schoopage est réalisé par projection de l'isolant dans la flamme d'un chalumeau en utilisant comme masque le débord des couches de même rang.

# FIG.1

Etape 1

Etape 2

Etape 3

roue bobinée

Etape 4

Projection
métallique

# FIG.2 A

# FIG.2B

FIG.3

Etape 1

Etape 2

Etape 3

roue   bobinée

Etape 4

Projection
isolante
puis
Projection
métallique

# FIG. 4